# EUROPEAN PATENT APPLICATION

(11) **EP 4 800 635 A1**
(43) Date of publication of application: **02.09.2026**
(21) Application number: 24882093.8
(22) Date of filing: 26.09.2024
(51) Int. Cl.: G06Q 50/26, G06Q 50/04

(54) **METHOD AND DEVICE FOR CALCULATING ENVIRONMENTAL IMPACT INFORMATION**

(30) Priority: 27.10.2023 JP 2023184763
(71) Applicant: Panasonic Intellectual Property Management Co., Ltd., Kadoma-shi, Osaka 571-0057 (JP)
(72) Inventor: MIYAKE Gaku, Kadoma-shi, Osaka 571-0057 (JP)
(74) Representative: Novagraaf International SA
(86) International application number: PCT/JP2024/034303
(87) International publication number: WO 2025/088976

(57) **Abstract**

A first activity amount and a second activity amount are generated based on facility data and production data for each calculation interval in a designated target period. the first activity amount is an activity amount of an energy consumption amount caused by manufacture of one product or one component. The second activity amount is an activity amount of a material consumption amount caused by the manufacture of the one product or one component. The facility data includes an energy consumption amount and a material consumption amount of manufacturing facility (60). The production data includes a number of non-defective product or component. A carbon dioxide emission amount is calculated based on the first activity amount, the second activity amount, a first emission factor that is an emission factor corresponding to the first activity amount, and a second emission factor that is an emission factor corresponding to the second activity amount.

## Description

### TECHNICAL FIELD

The present disclosure relates to a method for calculating environmental impact information and a device for calculating environmental impact information that calculates environmental impact accompanying manufacture of a product or a component. More specifically, the present disclosure relates to a method and a device for calculating environmental impact information that calculates a carbon dioxide emission amount accompanying manufacture of a product or a component based on data relating to energy consumption and material consumption in a manufacturing facility or the like (and further relating to waste in some cases) and production data.

### BACKGROUND ART

In recent years, realization of carbon neutral has been desired as a global warming countermeasure. In order to realize this, first, it is important to correctly evaluate the carbon dioxide emission amount in order to grasp the actual state. In the evaluation, it is necessary not only to evaluate the carbon dioxide emission amounts of the entire corporate activities at a company level but also to evaluate the carbon dioxide emission amounts accompanying manufacture of a product or component level. In fact, in Europe, regulations have been considered that impose the requirement to calculate the carbon footprint for each battery manufacturing factory and each model. Therefore, it has been required for manufacturers to calculate the carbon dioxide emission amount associated with the manufacture of products or components.

Therefore, a device for calculating a carbon dioxide emission amount discharged in a manufacturing process of a product or a component is known (see PTL 1). Fig. 10 shows an information processing device that calculates the carbon dioxide emission amount described in PTL 1. Here, in a manufacturing process of a product or a component, information processing device 101 acquires management information including power information regarding one or more types of power selected and used by energy management system 105 for each manufacturing factory according to a time zone among a plurality of types of power having different power generation methods, and information processing device 101 calculates a carbon dioxide emission amount discharged by manufacturing of the product or the component based on the power information included in the management information.

### Citation List

### Patent Literature

PTL 1: Unexamined Japanese Patent Publication No. 2021-189566

### SUMMARY OF THE INVENTION

In the method for calculating carbon dioxide amount described in PTL 1, although the carbon dioxide emission amount associated with the energy consumption in the manufacturing process of a product or a component can be calculated, the carbon dioxide emission amount associated with the consumed material and the generated waste is not considered. In general, from the viewpoint of production management, a measurement period of power consumption is as short as every minute or every hour, but a measurement period of a consumption material and a waste is longer than that of power, such as every day or every week. Therefore, in production management, it is rare that the measurement periods of the power consumption, the material consumption, and the waste coincide with each other. In this case, in order to align the evaluation periods to be calculated, the measurement period of the data having the longest measurement period is set as an evaluation period, and the average carbon dioxide emission amount associated with the manufacture of one product or one component in the evaluation period is calculated. Therefore, data with a short measurement period is averaged to match data with a long measurement period, and variation during the evaluation period cannot be reflected. In such a case, in order to grasp the carbon dioxide emission amount in a finer evaluation period in order to see the daily variation, it is necessary to shorten the measurement period of the data having the longest measurement period, and the number of man-hours for changing or managing the measurement device increases. Accordingly, since the purchase cost of the measurement device or the labor cost for managing the measurement device increases, there is a case where grasping in a finer period is abandoned.

In view of such a point, an object of the present disclosure is to provide a method and a device for calculating environmental impact information capable of calculating easily a carbon dioxide emission amount accompanying manufacture of a product or a component in a finer evaluation period by proportionally dividing an energy consumption amount and a material consumption amount necessary for manufacture of one product or one component based on production data.

An environmental impact information calculation method according to one aspect of the present disclosure is
a method for calculating a carbon dioxide emission amount caused by manufacture of products or components, and the method includes
generating, for each calculation interval in a designated target period, a first activity amount and a second activity amount based on facility data and production data, the first activity amount being an activity amount of an energy consumption amount caused by manufacture of one product or one component, the second activity amount being an activity amount of a material consumption amount caused by the manufacture of the one product or one component, the facility data including an energy consumption amount of a manufacturing facility acquired at every first predetermined time and a material consumption amount of the manufacturing facility acquired at every second predetermined time, the production data including a number of non-defective products or components manufactured in the manufacturing facility at every third predetermined time, and
calculating a carbon dioxide emission amount based on the first activity amount, the second activity amount, a first emission factor that is an emission factor corresponding to the first activity amount, and a second emission factor that is an emission factor corresponding to the second activity amount.

An environmental impact information calculation device according to another aspect of the present disclosure is
a device for calculating a carbon dioxide emission amount caused by manufacture of products or components, and the device includes
an activity amount data generation unit that generates, for each calculation interval in a designated target period, a first activity amount and a second activity amount based on facility data and production data, the first activity amount being an activity amount of an energy consumption amount caused by manufacture of one product or one component, the second activity amount being an activity amount of a material consumption amount caused by the manufacture of the one product or one component, the facility data including an energy consumption amount of a manufacturing facility acquired at every first predetermined time and a material consumption amount of the manufacturing facility acquired at every second predetermined time, the production data including a number of non-defective products or components manufactured in the manufacturing facility at every third predetermined time, and
an environmental impact information computation unit that calculates a carbon dioxide emission amount based on the first activity amount and the second activity amount calculated by the activity amount data generation unit, a first emission factor that is an emission factor corresponding to the first activity amount, and a second emission factor that is an emission factor corresponding to the second activity amount.

According to the method and the device for calculating environmental impact information according to the aspects of the present disclosure, it is possible to calculate the carbon dioxide emission amount associated with the manufacture of the product or the component at a fine calculation interval even when the measurement period of the energy consumption amount and the material consumption amount is different by performing distribution for each unit of the product or the component based on the production data. Therefore, in order to align the evaluation periods to be calculated, the measurement period of the data having the longest measurement period is set as an evaluation period, and it is not necessary to calculate the average carbon dioxide emission amount associated with the manufacture of one product or one component in the evaluation period. Therefore, it is possible to solve the problem that data with a short measurement period is averaged in accordance with data with a long measurement period, and variation during the evaluation period cannot be reflected.

### BRIEF DESCRIPTION OF THE DRAWINGS

Fig. 1 is a schematic configuration diagram of an environmental impact information calculation device according to a first exemplary embodiment of the present disclosure.
Fig. 2 is a flowchart illustrating a flow of processing of the environmental impact information calculation device according to the first exemplary embodiment of the present disclosure.
Fig. 3 is an explanatory diagram of acquired data of the environmental impact information calculation device according to the first exemplary embodiment of the present disclosure.
Fig. 4 is an explanatory diagram of activity amount data of the environmental impact information calculation device according to the first exemplary embodiment of the present disclosure.
Fig. 5 is a schematic configuration diagram of an environmental impact information calculation device according to a second exemplary embodiment of the present disclosure.
Fig. 6 is a flowchart illustrating a flow of processing of the environmental impact information calculation device according to the second exemplary embodiment of the present disclosure.
Fig. 7 is an explanatory diagram of acquired data of the environmental impact information calculation device according to the second exemplary embodiment of the present disclosure.
Fig. 8 is an explanatory diagram of activity amount data of the environmental impact information calculation device according to the second exemplary embodiment of the present disclosure.
Fig. 9 is an explanatory diagram of activity amount data of the environmental impact information calculation device according to the second exemplary embodiment of the present disclosure.

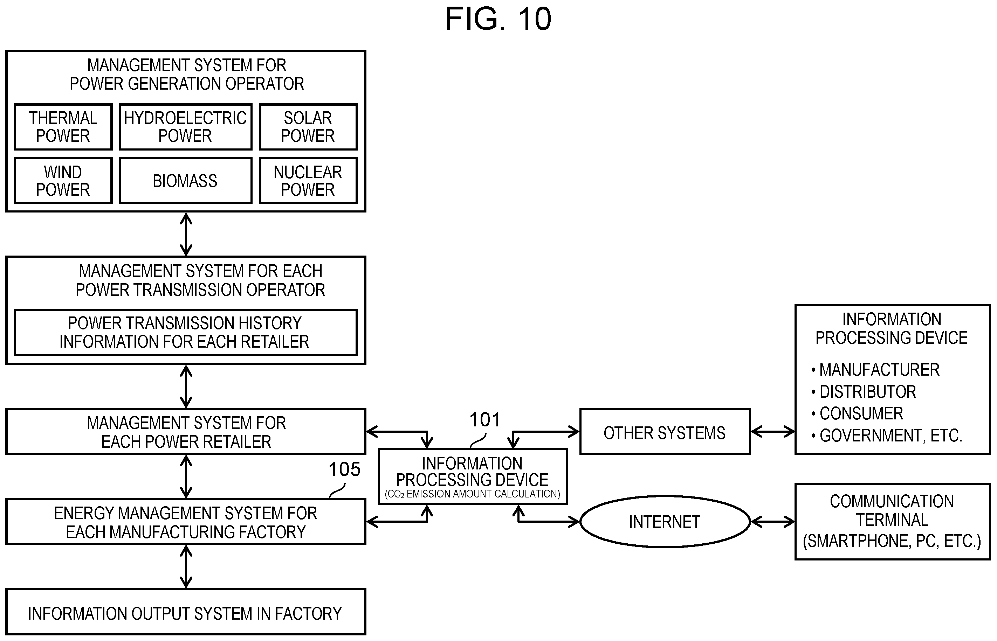

Fig. 10 is a schematic configuration diagram of a conventional environmental information impact calculation device.

### DESCRIPTION OF EMBODIMENT

### [First exemplary embodiment]

Hereinafter, environmental impact information calculation device 1 according to an exemplary embodiment of the present disclosure will be described in detail with reference to the drawings. In the drawings, the same or corresponding parts are denoted by the same reference marks, and description thereof will not be repeated. Note that, for ease of explanation, in the drawings referred to below, the configuration is simplified or schematically illustrated, and some constituent members are omitted.

### [Overall configuration]

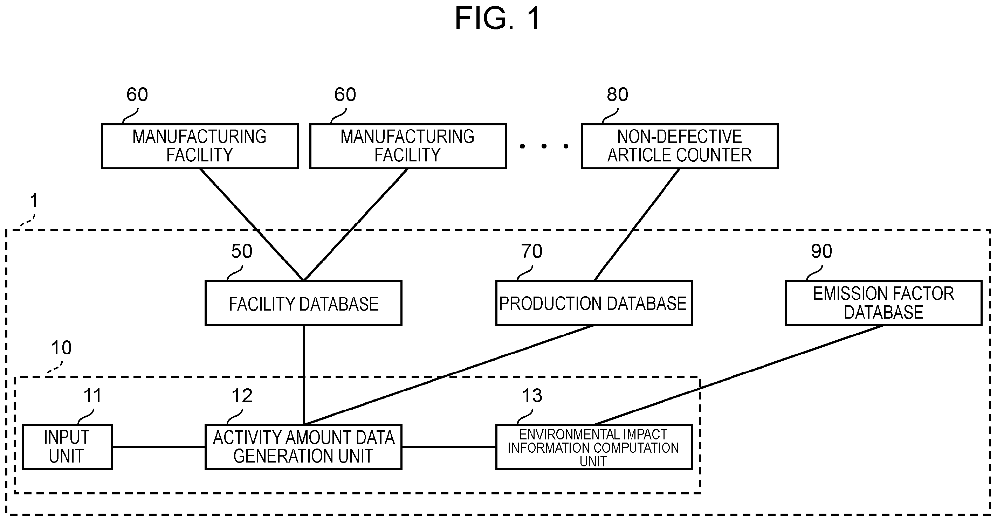

First, the overall configuration of environmental impact information calculation device 1 will be described. Fig. 1 is a schematic diagram illustrating a configuration of environmental impact information calculation device 1 according to a first exemplary embodiment of the present disclosure.

Environmental impact information calculation device 1 includes at least device body 10, facility database 50, production database 70, and emission factor database 90.

Device body 10 functions as a device that calculates a carbon dioxide emission amount accompanying manufacture of a product or a component from information on an energy consumption amount, a material consumption amount, and a waste amount of manufacturing facility 60 stored in facility database 50 (that is, information of facility data), information on the number of non-defective articles of manufacturing facility 60 stored in production database 70 (that is, information of production data), and information on each emission factor corresponding to an energy consumption amount, a material consumption amount, and waste stored in emission factor database 90 (that is, information of emission factor data).

In facility database 50, an energy consumption amount such as a power consumption amount or a fuel consumption amount consumed in manufacturing facility 60 is stored in a measurement period measured by a power meter or a fuel meter, that is, every predetermined time for energy (for example, every one day, ten days, or thirty days). In addition, a consumption weight of a raw material or an auxiliary material charged into manufacturing facility 60 is stored every predetermined time for material (for example, every three days or ten days) as measured by a weight meter or a flow meter. In addition, a waste amount such as process waste material discarded from manufacturing facility 60 is stored every predetermined time for waste (for example, every 30 days) measured by a weight meter or a flow meter. The predetermined time of each stored information may be different.

Production database 70 stores the number of non-defective articles of the products or components manufactured by manufacturing facility 60 every predetermined time for number of non-defective articles (for example, every day) measured by non-defective article counter 80.

In emission factor database 90, the disclosed emission factor information, the commercially available emission factor information, and the emission factor information obtained through investigation are stored. The emission factor information covers the emission factors of the energy type, the material type, and the waste type consumed in manufacturing facility 60.

Manufacturing facility 60 is, for example, a facility for manufacturing a product by consuming electric power, diesel fuel, and water as energy and consuming PP and ABS as materials, and a plurality of the manufacturing facilities are arranged.

### [Device body]

Next, device body 10 will be specifically described.

Device body 10 includes at least input unit 11, activity amount data generation unit 12, and environmental impact information computation unit 13.

Input unit 11 is, for example, a part that designates a target facility targeted for calculating environmental impact information among a plurality of manufacturing facilities 60, a target period (for example, September 1 to September 30), and a calculation interval (for example, every day), and inputs them to activity amount data generation unit 12. The calculation interval cannot be made smaller than a measurement interval of the number of non-defective articles stored in production database 70, that is, the predetermined time for number of non-defective articles.

Activity amount data generation unit 12 is a part that extracts data corresponding to the target period from data stored in facility database 50 and production database 70, and calculates an activity amount necessary for manufacturing one product or one component for each calculation interval by using the number of non-defective articles at the calculation interval. Specifically, it is a part that calculates, for each calculation interval, an average value of each of an energy consumption amount, a material consumption amount, and a generated waste amount necessary for manufacturing one product or one component.

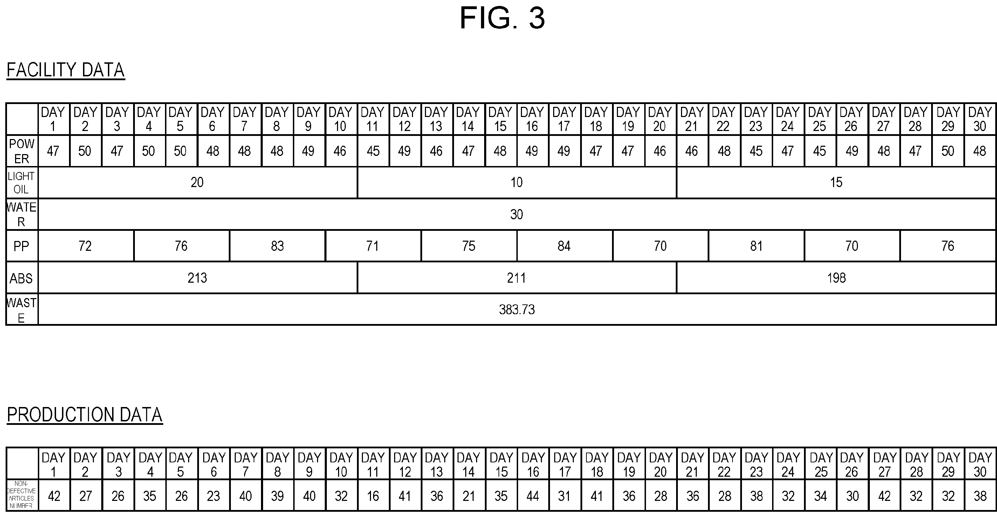

As an example, in Fig. 3, the average value is calculated as indicated below.

Here, the "target period" is intended to be a period for calculating carbon dioxide, and the "calculation target period" is intended to be a period for calculating an activity amount for each calculation interval in the "target period". For example, in a case where the target period is August and the calculation interval is one day, the calculation target period is a specific one day such as August 1, August 2, or August 3.

In a case of diesel fuel with the calculation interval set to 10 days, the predetermined time for diesel fuel is 10 days, and thus the calculation can be performed by [(average value of diesel fuel consumption amount for calculation target period of from first day to tenth day) = (diesel fuel consumption amount for 10 days from first day to tenth day)/total number of non-defective articles for 10 days]. However, in a case where the calculation target period exceeds the predetermined time, the calculation can be performed by (average value of diesel fuel consumption amount for calculation target period of from fifth day to fourteenth day) = [{(diesel fuel consumption amount for 10 days from first day to tenth day)/total number of non-defective articles for 10 days} × 5 days + (diesel fuel consumption amount for 10 days from eleventh day to twentieth day)/total number of non-defective articles for 10 days} × 5 days]/10 days.

In a case of PP with the calculation interval set to three days, the predetermined time for PP is three days, and thus the calculation can be performed by [(average value of PP consumption amount for calculation target period of from first day to third day) = (PP consumption amount for three days from first day to third day)/total number of non-defective articles for three days]. However, in a case where the calculation target period exceeds the predetermined time, the calculation can be performed by (average value of PP consumption amount for target period of from second day to fifth day) = [{(PP consumption amount for three days from first day to third day)/total number of non-defective articles for three days} × 2 days + (PP consumption amount for three days from fourth day to sixth day)/total number of non-defective articles for three days} × 2 days]/4 days.

Environmental impact information computation unit 13 is a part that extracts the emission factors corresponding to the respective activity amounts calculated by activity amount data generation unit 12 from emission factor database 90, and calculates the carbon dioxide emission amount associated with the manufacture of one product or one component by multiplying the calculated activity amount and the extracted emission factor and integrating them.

### [Operation]

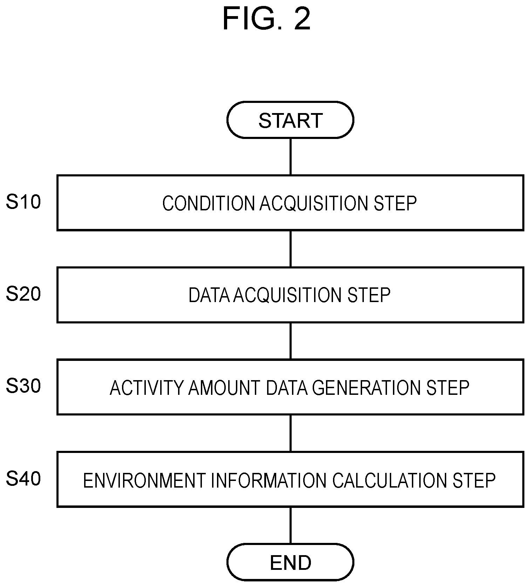

Next, the operation of environmental impact information calculation device 1 will be described. Hereinafter, a description will be given with reference to Fig. 2 illustrating an outline of an operation flow.

First, as a first step S10, activity amount data generation unit 12 acquires a target facility for calculating environmental impact information, a target period, and a calculation interval designated by input unit 11. As an example, it is assumed that activity amount data generation unit 12 is designated by input unit 11 that the target period is 30 days, and the calculation interval is every day for manufacturing facility 60 that consumes power, diesel fuel, and water as energy and consumes PP and ABS as materials to manufacture a product.

Next, in step S20, activity amount data generation unit 12 acquires the energy consumption amount, the material consumption amount, the waste amount, and the number of non-defective articles at every predetermined time in the designated target period for target manufacturing facility 60 from facility database 50 and production database 70. As an example, it is assumed that activity amount data generation unit 12 acquires, for energy, electric power consumption amount data every day as a predetermined time for electric power, diesel fuel consumption amount data every 10 days as a predetermined time for diesel fuel, and water consumption amount data every month as a predetermined time for water. For the material, it is assumed that activity amount data generation unit 12 acquires polypropylene (PP) consumption data every three days as a predetermined time for PP and ABS consumption data every ten days as a predetermined time for ABS, and activity amount data generation unit 12 acquires, for the waste, waste amount data every one month as a predetermined time for waste. Activity amount data generation unit 12 acquires, as the production data, the non-defective articles number data for each day as the predetermined time for number of non-defective articles (see Fig. 3).

Next, in step S30, activity amount data generation unit 12 calculates an activity amount necessary for manufacturing one product or one component at each calculation interval in the designated target period from the data acquired in step S20. The activity amount is calculated by the following equation.

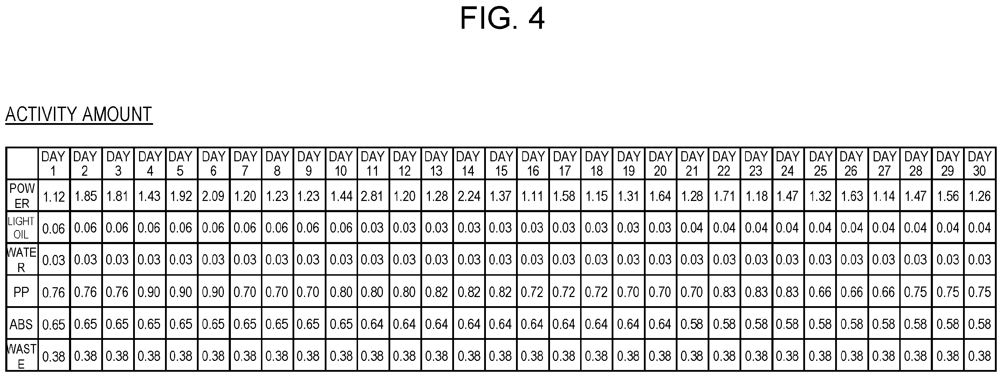

Activity amount = measurement value related to activity amount/number of non-defective articles in measurement period Specifically, activity amount data generation unit 12 calculates the activity amount of the power consumption amount necessary for manufacturing one product when the calculation interval in the designated target period (for example, first day to eleventh day) is one day by dividing the power consumption amount as the measurement value measured every day as the predetermined time for power in the target period (for example, first day to eleventh day) by the number of non-defective articles in one day in the measurement period (that is, predetermined time for number of non-defective articles). In Figs. 3 and 4, for example, activity amount of power consumption amount on first day in first day to eleventh day = measurement value regarding activity amount on first day/number of non-defective articles on first day in measurement period = 47/42 = 1.12. In addition, for example, activity amount of power consumption amount on eleventh day in first day to eleventh day = measurement value regarding activity amount on eleventh day/number of non-defective articles on eleventh day in measurement period = 45/16 = 2.81.

In addition, activity amount data generation unit 12 calculates the activity amount of the PP consumption amount necessary for manufacturing one product when the calculation interval in the designated target period (for example, first day to eleventh day) is one day by dividing the PP consumption amount as the measurement value measured every three days as the predetermined time for PP in the designated target period (for example, first day to eleventh day) by the number of non-defective articles as the total number of three days in the measurement period (that is, predetermined time for PP). In Figs. 3 and 4, for example, activity amount of PP consumption amount of each of first day to third day = measurement value regarding the activity amount of first day to third day/number of non-defective articles in measurement period of first day to third day = 72/(42 + 27 + 26) = 0.76. In addition, for example, activity amount of PP consumption amount on eleventh day = measurement value regarding activity amount from tenth day to twelfth day/number of non-defective articles in measurement period from tenth day to twelfth day = 71/(32 + 16 + 41) = 0.80.

In addition, activity amount data generation unit 12 calculates the activity amount of the diesel fuel consumption amount necessary for manufacturing one product when the calculation interval in the designated target period (for example, first day to eleventh day) is one day by dividing the diesel fuel consumption amount as a measurement value measured every ten days as a predetermined time for diesel fuel in the designated target period (for example, first day to eleventh day) by the number of non-defective articles in 10 days of the measurement period (that is, predetermined time for diesel fuel). In Figs. 3 and 4, for example, activity amount of diesel fuel consumption amount of each of first day to tenth day = measurement value regarding activity amount of first day to tenth day/number of non-defective articles in measurement period of first day to tenth day = 20/(42 + 27 + 26 + 35 + 26 + 23 + 40 + 39 + 40 + 32) = 0.06. In addition, for example, activity amount of diesel fuel consumption amount on eleventh day = measurement value regarding activity amount from eleventh day to twentieth day/number of non-defective articles in measurement period from eleventh day to twentieth day = 10/(16 + 41 + 36 + 21 + 35 + 44 + 31 + 41 + 36 + 28) = 0.03.

In addition, activity amount data generation unit 12 calculates the activity amount of the ABS consumption amount necessary for manufacturing one product when the calculation interval in the designated target period (for example, first day to eleventh day) is one day by dividing the ABS consumption amount as the measurement value measured every ten days as the predetermined time for ABS in the designated target period (for example, first day to eleventh day) by the number of non-defective articles in 10 days of the measurement period (that is, predetermined time for ABS). In Figs. 3 and 4, for example, activity amount of ABS consumption amount of each of first day to tenth day = measurement value regarding activity amount of first day to tenth day/number of non-defective articles in measurement period of first day to tenth day = 213/(42 + 27 + 26 + 35 + 26 + 23 + 40 + 39 + 40 + 32) = 0.65. In addition, for example, activity amount of ABS consumption amount on eleventh day = measurement value regarding activity amount from eleventh day to twentieth day/number of non-defective articles in measurement period from eleventh day to twentieth day = 211/(16 + 41 + 36 + 21 + 35 + 44 + 31 + 41 + 36 + 28) = 0.64.

In addition, activity amount data generation unit 12 calculates the activity amount of the water consumption amount necessary for manufacturing one product when the calculation interval in the designated target period (for example, first day to eleventh day) is one day by dividing the water consumption amount as the measurement value measured every 30 days as the predetermined period for water consumption amount in the designated target period (for example, first day to eleventh day) by the number of non-defective articles in 30 days of the measurement period (that is, predetermined period for water consumption amount). In Figs. 3 and 4, for example, activity amount of water consumption amount for each of first day to thirtieth day = measurement value regarding activity amount for first day to thirtieth day/number of non-defective articles in measurement period for first day to thirtieth day = 30/(42 + 27 + 26 + 35 + 26 + 23 + 40 + 39 + 40 + 32 + 16 + 41 + 36 + 21 + 35 + 44 + 31 + 41 + 36 + 28 + 36 + 28 + 38 + 32 + 34 + 30 + 42 + 32 + 32 + 38) = 0.03.

In addition, activity amount data generation unit 12 calculates the activity amount of the waste amount necessary for manufacturing one product when the calculation interval in the designated target period (for example, first day to eleventh day) is set to one day by dividing the waste amount as the measurement value measured every 30 days as the predetermined period for waste amount in the designated target period (for example, first day to eleventh day) by the number of non-defective articles in 30 days of the measurement period (that is, predetermined time for waste amount). In Figs. 3 and 4, for example, activity amount of waste amount of each of first day to thirtieth day = measurement value regarding activity amount of first day to thirtieth day/number of non-defective articles in measurement period of first day to thirtieth day = 383.73/(42 + 27 + 26 + 35 + 26 + 23 + 40 + 39 + 40 + 32 + 16 + 41 + 36 + 21 + 35 + 44 + 31 + 41 + 36 + 28 + 36 + 28 + 38 + 32 + 34 + 30 + 42 + 32 + 32 + 38) = 0.38.

Next, in step S40, environmental impact information computation unit 13 acquires the corresponding emission factor for each activity amount calculated in step S30 from emission factor database 90, and environmental impact information computation unit 13 calculates the carbon dioxide emission amount accompanying the manufacture of one product or one component based on the following equation.

Carbon dioxide emission amount accompanying manufacture of one product or one component = Σ activity amount i × emission factor j Here, i indicates a type of the activity amount, and emission factor j is an emission factor corresponding to activity amount i.

This calculation is exemplified below based on the example in step S30. $\begin{matrix}Carbon dioxide emission amount accompanying manufacture of one product or \\ one component = Σ activity amount i \times emission factor j \\ = activity amount of power consumption amount \times emission factor of power \\ consumption amount \\ + activity amount of PP consumption amount \times emission factor of PP \\ consumption amount \\ + activity amount of diesel fuel consumption amount \times emission factor of \\ diesel fuel consumption amount \\ + activity amount of ABS consumption amount \times emmision factor of ABS \\ consumption amount \\ + activity amount of water consumption amount \times emission factor of \\ water consumption amount \\ + activity amount of waste amount \times emission factor of waste amount\end{matrix}$ According to the first exemplary embodiment, since the energy consumption amount, the material consumption amount, and the waste amount are distributed for each unit of the product or component based on the number of non-defective articles of the production data, the carbon dioxide emission amount associated with the manufacture of the product or component can be calculated at a calculation interval shorter than the calculation interval in the related art, for example, every day, even when the respective predetermined times, which are the measurement periods of the energy consumption amount, the material consumption amount, and the waste amount, are different.

As understood from the above, the emission factor corresponding to the energy consumption amount is a coefficient for calculating the carbon dioxide emission amount from the energy consumption amount. When the unit of the energy consumption amount is J and the unit of the carbon dioxide emission amount is kg-CO2, the emission factor corresponding to the energy consumption amount has a unit of kg-CO2/J. The emission factor corresponding to the material consumption amount is a coefficient for calculating the carbon dioxide emission amount from the material consumption amount. When the unit of the material consumption amount is kg and the unit of the carbon dioxide emission amount is kg-CO2, the emission factor corresponding to the material consumption amount has a unit of kg-CO2/kg. The emission factor corresponding to the waste amount is a coefficient for calculating the carbon dioxide emission amount from the waste amount. When the unit of the waste amount is kg and the unit of the carbon dioxide emission amount is kg-CO2, the emission factor corresponding to the waste amount has a unit of kg-CO2/kg.

### [Second exemplary embodiment]

In the first exemplary embodiment, the carbon dioxide emission amount accompanying manufacture of one product or one component is calculated by utilizing the number of non-defective articles from production database 70.

However, since the activity amount in the same measurement period remains constant, the variation in the activity amount within the measurement period cannot be reflected.

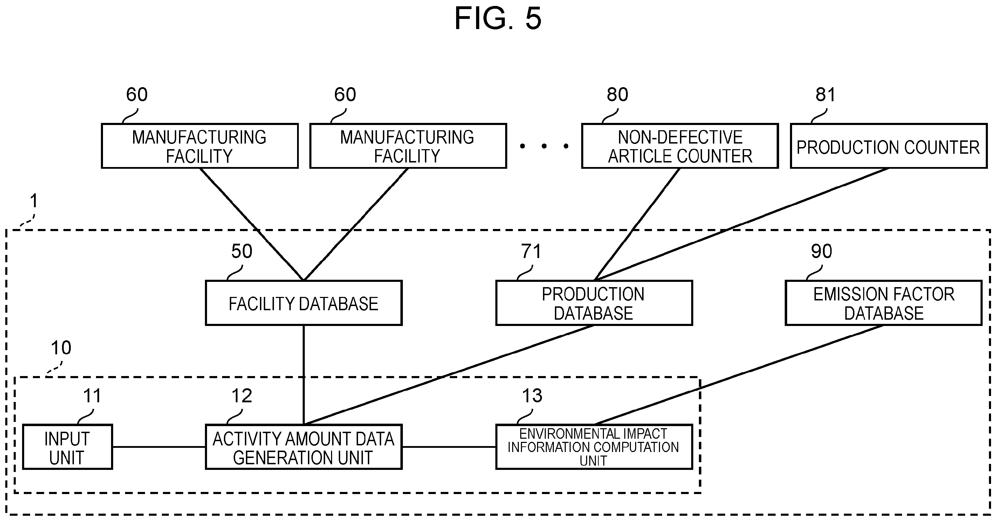

Therefore, as illustrated in Fig. 5, the variation in the activity amount within the measurement period can be reflected by utilizing production database 71 in which not only the non-defective article number data measured by non-defective article counter 80 but also the manufacturing number data measured by production counter 81 are stored. Production counter 81 measures a production quantity of products or components manufactured by manufacturing facility 60 every predetermined time (for example, every day) measured by non-defective article counter 80, and stores the number in production database 70.

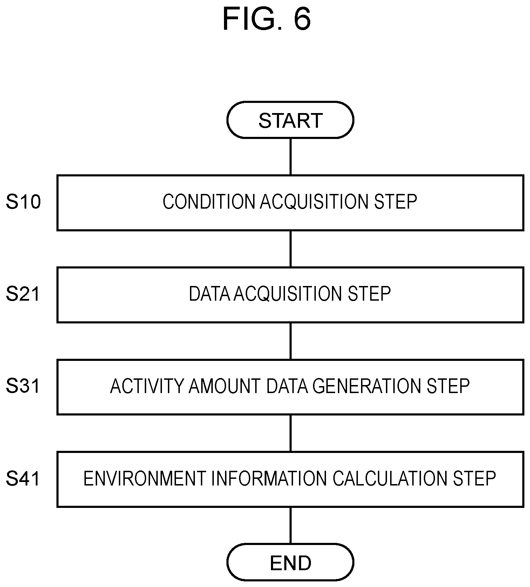

The calculation procedure is illustrated in Fig. 6. As a calculation step, condition acquisition step S10 is similar to that of the first exemplary embodiment, but the subsequent steps are different.

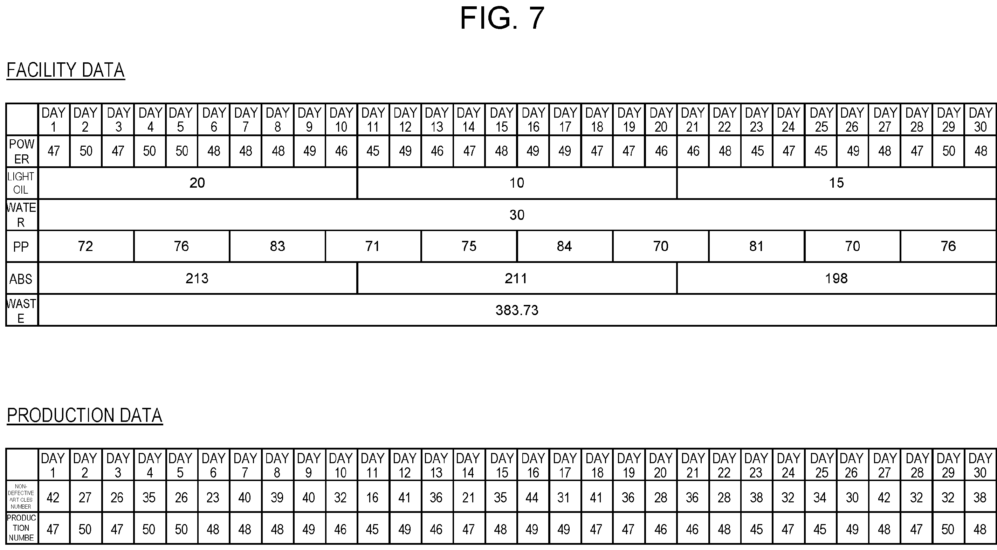

In data acquisition step S21, in addition to the operation in data acquisition step S20, activity amount data generation unit 12 additionally acquires manufacturing number data (see Fig. 7).

Next, in activity amount data generation step S31, activity amount data generation unit 12 calculates the activity amount by using the production quantity and the number of non-defective articles for the measurement value by the following equation.

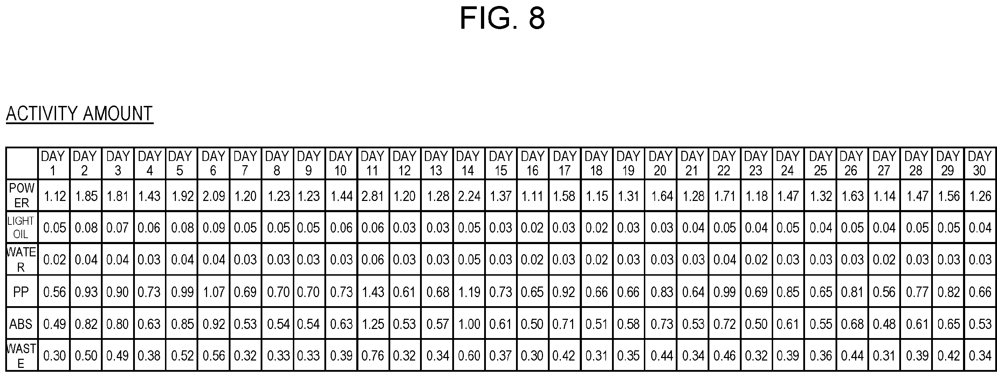

Activity amount = measurement value related to activity amount × (production quantity in calculation target period/production quantity in measurement period)/number of non-defective articles in calculation target period Specifically, assuming that the calculation interval in the designated target period (for example, first day to eleventh day) is one day, activity amount data generation unit 12 calculates the activity amount of the power consumption amount on the first day necessary for manufacturing one product by dividing a value obtained by multiplying the power consumption amount as the measurement value measured every day as the predetermined time for power in the target period (for example, first day to eleventh day) by (production quantity in the calculation target period on first day/production quantity in measurement period on first day) by the number of non-defective articles in the calculation target period on first day. In Figs. 7 and 8, for example, activity amount of power consumption amount on first day in first day to eleventh day = measurement value related to activity amount on first day × (production quantity in calculation target period on first day/production quantity in measurement period on first day)/number of non-defective articles in calculation target period on first day = 47 × (production quantity in calculation target period on first day [47]/production quantity in measurement period on first day [47])/number of non-defective articles in calculation target period on first day [42] = 1.12. For example, activity amount of power consumption amount on eleventh day in first day to eleventh day = measurement value related to activity amount on eleventh day × (production quantity in calculation target period on eleventh day/production quantity in measurement period on eleventh day)/number of non-defective articles in calculation target period on eleventh day = 45 × (production quantity in calculation target period on eleventh day [45]/production quantity in measurement period on eleventh day [45])/number of non-defective articles in calculation target period on eleventh day [16] = 2.81.

In addition, activity amount data generation unit 12 calculates the activity amount of the PP consumption amount on the first day necessary for manufacturing one product when the calculation interval in the designated target period (for example, first day to eleventh day) is one day by dividing a value obtained by multiplying the PP consumption amount as the measurement value measured every three days as the predetermined time for PP in the designated target period (for example, first day to eleventh day) by (production quantity in calculation target period on first day/production quantity in measurement period from first day to third day) by the number of non-defective articles in calculation target period on first day. In Figs. 7 and 8, for example, activity amount of PP consumption amount on first day = measurement value regarding activity amount on first day × (production quantity in calculation target period on first day/production quantity in measurement period from first day to third day)/number of non-defective articles in calculation target period on first day = 72 × (production quantity in calculation target period on first day [47]/production quantity in measurement period from first day to third day [47 + 50 + 47])/number of non-defective articles in calculation target period on first day [42] = 0.56. For example, activity amount of PP consumption amount on eleventh day = measurement value related to activity amount from tenth day to twelfth day × (production quantity in calculation target period on eleventh day/production quantity in measurement period from tenth day to twelfth day)/number of non-defective articles in calculation target period on eleventh day = 71×(production quantity in calculation target period on eleventh day [45]/production quantity in measurement period from tenth day to twelfth day [46 + 45 + 49])/number of non-defective articles in calculation target period on eleventh day [16] = 1.43.

In addition, activity amount data generation unit 12 calculates the activity amount of the diesel fuel consumption amount on the first day necessary for manufacturing one product when the calculation interval in the designated target period (for example, first day to eleventh day) is one day by dividing a value obtained by multiplying the diesel fuel consumption amount as a measurement value measured every ten days as a predetermined time for diesel fuel in the designated target period (for example, first day to eleventh day) by (production quantity in calculation target period on first day/production quantity in measurement period from first day to tenth day or eleventh day to twentieth day) by the number of non-defective articles in calculation target period on first day. In Figs. 7 and 8, for example, activity amount of diesel fuel consumption amount on first day = measurement value related to activity amount on first day × (production quantity in calculation target period on first day/production quantity in measurement period from first day to tenth day)/number of non-defective articles in calculation target period on first day = 20 × (production quantity in calculation target period on first day [47]/production quantity in measurement period from first day to tenth day [47 + 50 + 47 + 50 + 50 + 48 + 48 + 48 + 49 + 46]/number of non-defective articles in calculation target period on first day [42] = 0.05. For example, activity amount of the diesel fuel consumption amount on eleventh day = measurement value related to activity amount on eleventh day × (production quantity in calculation target period on eleventh day/production quantity in measurement period from eleventh day to twentieth day)/number of non-defective articles in calculation target period on eleventh day = 10 × (production quantity in calculation target period on eleventh day [45]/production quantity in measurement period from eleventh day to twentieth day [45 + 49 + 46 + 47 + 48 + 49 + 49 + 47 + 47 + 46]/number of non-defective articles in calculation target period on eleventh day [16] =0.06.

In addition, activity amount data generation unit 12 calculates the activity amount of the ABS consumption amount on the first day necessary for manufacturing one product when the calculation interval in the designated target period (for example, first day to eleventh day) is one day by dividing a value obtained by multiplying the ABS consumption amount as the measurement value measured every ten days as the predetermined time for ABS in the designated target period (for example, first day to eleventh day) by (production quantity in calculation target period on first day/production quantity in measurement period from first day to tenth day or eleventh day to twentieth day) by the number of non-defective articles in the calculation target period on the first day. In Figs. 7 and 8, for example, activity amount of ABS consumption on first day = measurement value related to activity amount on first day × (production quantity in calculation target period on first day/production quantity in measurement period from first day to tenth day)/number of non-defective articles in calculation target period on first day = 213× (production quantity in calculation target period on first day [47]/production quantity in measurement period from first day to tenth day [47 + 50 + 47 + 50 + 50 + 48 + 48 + 48 + 49 + 46]/number of non-defective articles in calculation target period on first day [42] =0.49. In addition, for example, activity amount of ABS consumption amount on eleventh day = measurement value regarding activity amount on eleventh day × (production quantity in calculation target period on eleventh day/production quantity in measurement period from eleventh day to twentieth day)/number of non-defective articles in calculation target period on eleventh day = 211× (production quantity in calculation target period on eleventh day [45]/production quantity in measurement period from eleventh day to twentieth day [45 + 49 + 46 + 47 + 48 + 49 + 49 + 47 + 47 + 46]/number of non-defective articles in calculation target period on eleventh day [16] = 1.25.

In addition, activity amount data generation unit 12 calculates the activity amount of the water consumption amount on the first day necessary for manufacturing one product when the calculation interval in the designated target period (for example, first day to eleventh day) is one day by dividing a value obtained by multiplying the water consumption amount as the measurement value measured every 30 days as the predetermined period for water consumption amount in the designated target period (for example, first day to eleventh day) by (production quantity in calculation target period on first day/production quantity in measurement period from first day to thirtieth day (that is, predetermined time for water consumption amount)) by the number of non-defective articles in the calculation target period on the first day. In Figs. 7 and 8, for example, activity amount of water consumption amount on first day = measurement value related to activity amount on first day × (production quantity in calculation target period on first day/production quantity in measurement period from first day to thirtieth day)/number of non-defective articles in calculation target period on first day = 30× (production quantity in calculation target period on first day [47]/production quantity in measurement period from first day to thirtieth day [47 + 50 + 47 + 50 + 50 + 48 + 48 + 48 + 49 + 46 + 45 + 49 + 46 + 47 + 48 + 49 + 49 + 47 + 47 + 46 + 46 + 48 + 45 + 47 + 45 + 49 + 48 + 47 + 50 + 48]/number of non-defective articles in calculation target period on first day [42] = 0.02. In addition, for example, activity amount of water consumption amount on eleventh day = measurement value related to activity amount from first day to thirtieth day × (production quantity in calculation target period on eleventh day/production quantity in measurement period from first day to thirtieth day)/number of non-defective articles in calculation target period on eleventh day = 30× (production quantity in calculation target period on eleventh day [45]/production quantity in measurement period from first day to thirtieth day [47 + 50 + 47 + 50 + 50 + 48 + 48 + 48 + 49 + 46 + 45 + 49 + 46 + 47 + 48 + 49 + 49 + 47 + 47 + 46 + 46 + 48 + 45 + 47 + 45 + 49 + 48 + 47 + 50 + 48]/number of non-defective articles in calculation target period on eleventh day [16] =0.06.

In addition, activity amount data generation unit 12 calculates the activity amount of the waste amount on the first day necessary for manufacturing one product when the calculation interval in the designated target period (for example, first day to eleventh day) is one day by dividing a value obtained by multiplying (production quantity in calculation target period on first day/production quantity in measurement period from first day to thirtieth day (that is, predetermined time for waste amount)) by the waste amount as the measurement value measured every 30 days as the predetermined period for waste amount in the designated target period (for example, first day to eleventh day) by the number of non-defective articles in calculation target period on first day. In Figs. 7 and 8, for example, activity amount of waste amount on first day = measurement value related to activity amount from first day to thirtieth day × (production quantity in calculation target period on first day/production quantity in measurement period)/number of non-defective articles in calculation target period on first day = 383.73 × (production quantity in calculation target period on first day [47]/production quantity in measurement period from first day to thirtieth day [47 + 50 + 47 + 50 + 50 + 48 + 48 + 48 + 49 + 46 + 45 + 49 + 46 + 47 + 48 + 49 + 49 + 47 + 47 + 46 + 46 + 48 + 45 + 47 + 45 + 49 + 48 + 47 + 50 + 48]/number of non-defective articles in calculation target period on first day [42] = 0.30. For example, activity amount of waste amount on eleventh day = measurement value related to activity amount on eleventh day × (production quantity in calculation target period on eleventh day/production quantity in measurement period from first day to thirtieth day)/number of non-defective articles in calculation target period on eleventh day = 383.73 × (production quantity in calculation target period on eleventh day [45]/production quantity in measurement period from first day to thirtieth day [47 + 50 + 47 + 50 + 50 + 48 + 48 + 48 + 49 + 46 + 45 + 49 + 46 + 47 + 48 + 49 + 49 + 47 + 47 + 46 + 46 + 48 + 45 + 47 + 45 + 49 + 48 + 47 + 50 + 48]/number of non-defective articles in calculation target period on eleventh day [16] =0.76.

Further, a case where the calculation interval is seven days will be described below.

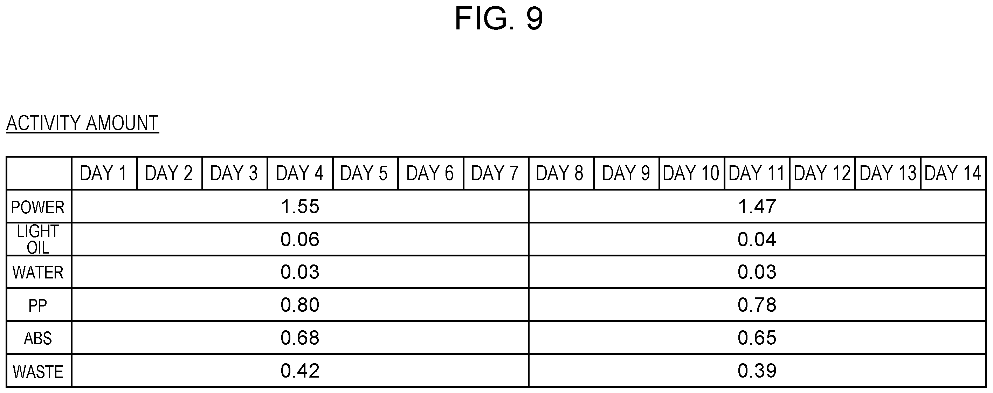

In a case where the calculation interval differs, activity amount data generation unit 12 calculates the activity amount of the power consumption amount necessary for manufacturing one product when the calculation interval in the designated target period (for example, first day to fourteenth day) is seven days by dividing a value obtained by multiplying the power consumption amount as the measurement value measured every day as the predetermined time for power in the calculation target period (for example, seven days from first day to seventh day) by (production quantity in calculation target period/production quantity in measurement period) by the number of non-defective articles in calculation target period. In Figs. 7 and 9, for example, activity amount of power consumption amount for 7 days from first day to seventh day = measurement value related to activity amount for first day to seventh day × (production quantity in calculation target period from first day to seventh day/production quantity in measurement period from first day to seventh day)/number of non-defective articles in calculation target period from first day to seventh day = [47 + 50 + 47 + 50 + 50 + 48 + 48] ×(production quantity in calculation target period from first day to seventh day [47 + 50 + 47 + 50 + 50 + 48 + 48]/production quantity in measurement period from first day to seventh day [47 + 50 + 47 + 50 + 50 + 48 + 48])/number of non-defective articles in calculation target period from first day to seventh day [42 + 27 + 26 + 35 + 26 + 23 + 40] = 340 × 340/340/219 = 1.55. For example, activity amount of power consumption amount for 7 days from eighth day to fourteenth day = measurement value related to activity amount for eighth day to fourteenth day × (production quantity in calculation target period from eighth day to fourteenth day/production quantity in measurement period from eighth day to fourteenth day)/number of non-defective articles in calculation target period from eighth day to fourteenth day = [48 + 49 + 46 + 45 + 49 + 46 + 47] × (production quantity in calculation target period from eighth day to fourteenth day [48 + 49 + 46 + 45 + 49 + 46 + 47]/production quantity in measurement period from eighth day to fourteenth day [48 + 49 + 46 + 45 + 49 + 46 + 47])/number of non-defective articles in calculation target period from eighth day to fourteenth day [39 + 40 + 32 + 16 + 41 + 36 + 21] = 330 × 330/330/225 = 1.47.

In addition, activity amount data generation unit 12 calculates the activity amount of the PP consumption amount necessary for manufacturing one product when the calculation interval in the designated target period (for example, first day to fourteenth day) is seven days by dividing a value obtained by multiplying the PP consumption amount as the measurement value measured every three days as the predetermined time for PP in the calculation target period (for example, seven days from first day to seventh day) by (production quantity in calculation target period/production quantity in measurement period from first day to ninth day) by the number of non-defective articles in the calculation target period. In Figs. 7 and 9, for example, activity amount of PP consumption amount in 7 days from first day to seventh day = {measurement value regarding activity amount from first day to third day [72] ×(production quantity in calculation period from first day to third day [47 + 50 + 47]/production quantity in measurement period from first day to third day [47 + 50 + 47]) + measurement value regarding activity amount from fourth day to sixth day [76] ×(production quantity in calculation period from fourth day to sixth day [50 + 50 + 48]/production quantity in measurement period from fourth day to sixth day [50 + 50 + 48]) + measurement value regarding activity amount from seventh day to ninth day [83] × (production quantity manufactured on seventh day [48]/production quantity in measurement period from seventh day to ninth day in the calculation period [48 + 48 + 49])}/number of non-defective articles in calculation target period from first day to seventh day [42 + 27 + 26 + 35 + 26 + 23 + 40] = {72 × (144/144) + 76 × (148/148) + 83× (48/145)}/219 = (72 + 76 + 27.5)/219 = 0.80. In addition, for example, activity amount of PP consumption amount for 7 days from eighth day to fourteenth day = {measurement value regarding activity amount from seventh day to ninth day [83] × (production quantity in calculation period from eighth day to ninth day [48 + 49]/production quantity in measurement period from seventh day to ninth day [48 + 48 + 49]) + measurement value regarding activity amount from tenth day to twelfth day [71] × (production quantity in calculation period from tenth day to twelfth day [46 + 45 + 49]/production quantity in measurement period from tenth day to twelfth day [46 + 45 + 49]) + measurement value regarding activity amount from thirteenth day to fifteenth day [75] ×(production quantity on thirteenth day to fourteenth day in calculation period [46 + 47]/production quantity in measurement period from thirteenth day to fifteenth day [46 + 47 + 48])}/number of non-defective articles in calculation target period from eighth day to fourteenth day [39 + 40 + 32 + 16 + 41 + 36 + 21] = {83× (97/145) + 71 × (140/140) + 75 × (93/141)}/225= (55.5 + 71.0 + 49.5)/225 = 0.78.

In addition, activity amount data generation unit 12 calculates the activity amount of the diesel fuel consumption amount necessary for manufacturing one product when the calculation interval in the designated target period (for example, first day to the fourteenth day) is set to 7 days by dividing a value obtained by multiplying the diesel fuel consumption amount as the measurement value measured every 10 days as the predetermined time for diesel fuel in the calculation target period (for example, 7 days from first day to seventh day) by (production quantity in calculation target period from first day to seventh day/production quantity in measurement period from first day to tenth day) by the number of non-defective articles in the calculation target period. In Figs. 7 and 9, for example, activity amount of diesel fuel consumption amount in 7 days from first day to seventh day = {measurement value regarding activity amount from first day to tenth day [20] × (production quantity in calculation target period from first day to seventh day [47 + 50 + 47 + 50 + 50 + 48 + 48]/production quantity in measurement period from first day to tenth day [47 + 50 + 47 + 50 + 50 + 48 + 48 + 48 + 49 + 46])}/number of non-defective articles in calculation target period from first day to seventh day [42 + 27 + 26 + 35 + 26 + 23 + 40] = 20 × 340/483/219 = 0.06. For example, activity amount of diesel fuel consumption amount in 7 days from eighth day to fourteenth day = {measurement value regarding activity amount from first day to tenth day [20] × (production quantity in calculation target period from eighth day to tenth day [48 + 49 + 46]/production quantity in measurement period from first day to tenth day [47 + 50 + 47 + 50 + 50 + 48 + 48 + 48 + 49 + 46] ) + measurement value regarding activity amount from eleventh day to twentieth day [10] × (production quantity in calculation target period from eleventh day to fourteenth day [45 + 49 + 46 + 47]/production quantity in measurement period from eleventh day to twentieth day (45 + 49 + 46 + 47 + 48 + 49 + 49 + 47 + 47 + 46)}/number of non-defective articles in calculation target period from eighth day to fourteenth day [39 + 40 + 32 + 16 + 41 + 36 + 21] = {20 × (143/483) + 10 × (187/473)}/225= (5.92 + 3.95)/225 = 0.04.

In addition, activity amount data generation unit 12 calculates the activity amount of the ABS consumption amount necessary for manufacturing one product when the calculation interval in the designated target period (for example, first day to fourteenth day) is seven days by dividing a value obtained by multiplying the ABS consumption amount as the measurement value measured every ten days as the predetermined time for ABS in the calculation target period (for example, seven days from first day to seventh day) by (production quantity in calculation target period from first day to seventh day/production quantity in measurement period from first day to tenth day) by the number of non-defective articles in the calculation target period. In Figs. 7 and 9, for example, activity amount of ABS consumption amount in 7 days of first day to seventh day = measurement value regarding activity amount of first day to tenth day [213] ×(production quantity in calculation target period from first day to seventh day [47 + 50 + 47 + 50 + 50 + 48 + 48]/production quantity in measurement period from first day to tenth day [47 + 50 + 47 + 50 + 50 + 48 + 48 + 48 + 49 + 46])}/number of non-defective articles in calculation target period of first day to seventh day [42 + 27 + 26 + 35 + 26 + 23 + 40] = 213 × 340/483/219 = 0.68. For example, activity amount of ABS consumption amount for 7 days from eighth day to fourteenth day = {measurement value regarding activity amount of first day to tenth day [213] × (production quantity in calculation target period from eighth day to tenth day [48 + 49 + 46]/production quantity in measurement period from first day to tenth day [47 + 50 + 47 + 50 + 50 + 48 + 48 + 48 + 49 + 46]) + measurement value regarding activity amount of eleventh day to twentieth day [211] × (production quantity in calculation target period from eleventh day to fourteenth day [45 + 49 + 46 + 47]/production quantity in measurement period from eleventh day to twentieth day [45 + 49 + 46 + 47] + 48 + 49 + 49 + 47 + 47 + 46)/number of non-defective articles in calculation target period from eighth day to fourteenth day [39 + 40 + 32 + 16 + 41 + 36 + 21] = {213 × (143/483) + 211 × (187/473)}/225 = (63.1 + 83.4)/225 = 0.65.

In addition, activity amount data generation unit 12 calculates the activity amount of the water consumption amount necessary for manufacturing one product when the calculation interval in the designated target period (for example, first day to the fourteenth day) is 7 days by dividing a value obtained by multiplying the water consumption amount as the measurement value measured every 30 days as the predetermined period for water consumption amount in the calculation target period (for example, 7 days from first day to seventh day) by (production quantity in calculation target period from first day to seventh day/production quantity in measurement period from first day to thirtieth day (that is, predetermined time for water consumption amount)) by the number of non-defective articles in the calculation target period. In Figs. 7 and 9, for example, activity amount of water consumption amount in 7 days from first day to seventh day = {measurement value regarding activity amount from first day to thirtieth day [30] × (production quantity in calculation target period from first day to seventh day [47 + 50 + 47 + 50 + 50 + 48 + 48]/production quantity in measurement period from first day to thirtieth day [47 + 50 + 47 + 50 + 50 + 48 + 48 + 48 + 49 + 46 + 45 + 49 + 46 + 47 + 48 + 49 + 49 + 47 + 47 + 46 + 46 + 48 + 45 + 47 + 45 + 49 + 48 + 47 + 50 + 48])}/number of non-defective articles in calculation target period from first day to seventh day [42 + 27 + 26 + 35 + 26 + 23 + 40] = 30 × 340/1429/219 = 0.03. For example, activity amount of water consumption amount in 7 days from eighth day to fourteenth day = {measurement value regarding activity amount from first day to thirtieth day [30] × (production quantity in calculation target period from eighth day to fourteenth day [48 + 49 + 46 + 45 + 49 + 46 + 47]/production quantity in measurement period from first day to thirtieth day [47 + 50 + 47 + 50 + 50 + 48 + 48 + 48 + 49 + 46 + 45 + 49 + 46 + 47 + 48 + 49 + 49 + 47 + 47 + 46 + 46 + 48 + 45 + 47 + 45 + 49 + 48 + 47 + 50 + 48])}/number of non-defective articles in calculation target period from eighth day to fourteenth day [39 + 40 + 32 + 16 + 41 + 36 + 21] = {30 × 330/1382/225 = 0.03.

In addition, activity amount data generation unit 12 calculates the activity amount of the waste amount necessary for manufacturing one product when the calculation interval in the designated target period (for example, first day to fourteenth day) is 7 days by dividing a value obtained by multiplying (production quantity in calculation target period from first day to seventh day/production quantity in measurement period from first day to thirtieth day (that is, predetermined time for waste amount)) by the waste amount as the measurement value measured every 30 days as the predetermined period for waste amount in the calculation target period (for example, 7 days from first day to seventh day) by the number of non-defective articles in calculation target period. In Figs. 7 and 9, for example, activity amount of waste amount in 7 days from first day to seventh day = {measurement value regarding activity amount from first day to thirtieth day [383.73] × (production quantity in calculation target period from first day to seventh day [47 + 50 + 47 + 50 + 50 + 48 + 48]/production quantity in measurement period from first day to thirtieth day [47 + 50 + 47 + 50 + 50 + 48 + 48 + 48 + 49 + 46 + 45 + 49 + 46 + 47 + 48 + 49 + 49 + 47 + 47 + 46 + 46 + 48 + 45 + 47 + 45 + 49 + 48 + 47 + 50 + 48])}/number of non-defective articles in calculation target period from first day to seventh day [42 + 27 + 26 + 35 + 26 + 23 + 40] = 383.73 × 340/1429/219 = 0.42. In addition, for example, activity amount of waste amount for 7 days from eighth day to fourteenth day = {measurement value regarding activity amount from first day to thirtieth day [383.73] × (production quantity in calculation target period from eighth day to fourteenth day [48 + 49 + 46 + 45 + 49 + 46 + 47]/production quantity in measurement period from first day to thirtieth day [47 + 50 + 47 + 50 + 50 + 48 + 48 + 48 + 49 + 46 + 45 + 49 + 46 + 47 + 48 + 49 + 49 + 47 + 47 + 46 + 46 + 48 + 45 + 47 + 45 + 49 + 48 + 47 + 50 + 48])}/number of non-defective articles in calculation target period from eighth day to fourteenth day [39 + 40 + 32 + 16 + 41 + 36 + 21] = 383.73 × 330/1382/225 = 0.39.

Next, in step S41, as in step S40, environmental impact information computation unit 13 acquires the corresponding emission factor for each activity amount calculated in step S31 from emission factor database 90, and environmental impact information computation unit 13 calculates the carbon dioxide emission amount accompanying the manufacture of one product or one component based on the following equation.

Carbon dioxide emission amount accompanying manufacture of one product or one component = Σ activity amount i × emission factor j Here, i indicates a type of the activity amount, and emission factor j is an emission factor corresponding to activity amount i.

This calculation is exemplified below based on the example in step S31. $\begin{matrix}Carbon dioxide emission amount accompanying manufacture of one product or \\ one component = Σ activity amount i \times emission factor j \\ = activity amount of power consumption amount \times emission factor of power \\ consumption amount \\ + activity amount of PP consumption amount \times emission factor of PP \\ consumption amount \\ + activity amount of diesel fuel consumption amount \times emission factor of \\ diesel fuel consumption amount \\ + activity amount of ABS consumption amount \times emmision factor of ABS \\ consumption amount \\ + activity amount of water consumption amount \times emission factor of \\ water consumption amount \\ + activity amount of waste amount \times emission factor of waste amount\end{matrix}$

As described above, the variation in the activity amount within the measurement period can be reflected as illustrated in Fig. 8 by using the production quantity in addition to the number of non-defective articles.

According to the first and second exemplary embodiments described above, the activity amount of the energy consumption amount and the activity amount of the material consumption amount accompanying manufacture of one product or one component are generated from the facility data including the energy consumption amount and the material consumption amount and the production data including the number of non-defective articles, and the respective activity amounts and the emission factors corresponding to the respective activity amounts are multiplied together to sum up the multiplied values. In this way, even when the measurement period of at least the energy consumption amount and the material consumption amount and the measurement period of the waste amount are different based on the production data including at least the number of non-defective articles, the carbon dioxide emission amount associated with the production of one product or one component can be calculated. Therefore, in order to align the evaluation periods to be calculated, the measurement period of the data having the longest measurement period is set as an evaluation period, and it is not necessary to calculate the average carbon dioxide emission amount associated with the manufacture of one product or one component in the evaluation period. Therefore, it is possible to solve the problem that data with a short measurement period is averaged in accordance with data with a long measurement period, and variation during the evaluation period cannot be reflected.

Note that there is a case where the waste amount is zero because 100% of the material is used, or there is no information on the waste amount, or there is no device or means for measuring the waste amount. In such a case, the activity amount of the waste amount need not be considered.

Although the embodiments of the present disclosure have been described above, the above-described embodiments are merely examples for carrying out the present disclosure. Therefore, the present disclosure is not limited to the above-described exemplary embodiments, and the above-described exemplary embodiments can be appropriately modified and implemented without departing from the gist of the present disclosure.

Note that, by combining any of the exemplary embodiments and modifications thereof described above as appropriate, it is possible to achieve the effects thereof. Additionally, combinations of exemplary embodiments, combinations of examples, or combinations of exemplary embodiments and examples are possible, and combinations of features in different exemplary embodiments or examples are also possible.

### INDUSTRIAL APPLICABILITY

The method for calculating environmental impact information and the device for calculating environmental impact information according to the aspects of the present disclosure can correctly calculate the carbon dioxide emission amount associated with the manufacture of the product or the component by utilizing the production data even for data having different measurement intervals.

### REFERENCE MARKS IN THE DRAWINGS

- 1: environmental impact information calculation device
- 10: device body
- 11: input unit
- 12: activity amount data generation unit
- 13: environmental impact information computation unit
- 50: facility database
- 60: manufacturing facility
- 70: production database
- 80: non-defective article counter
- 81: production counter
- 90: emission factor database
- 101: information processing device
- 105: energy management system for each manufacturing factory

## Claims

1. An environmental impact information calculation method for calculating a carbon dioxide emission amount caused by manufacture of products or components, the method comprising:
generating, for each calculation interval in a designated target period, a first activity amount and a second activity amount based on facility data and production data,
the first activity amount being an activity amount of an energy consumption amount caused by manufacture of one product or one component,
the second activity amount being an activity amount of a material consumption amount caused by the manufacture of the one product or one component,
the facility data including an energy consumption amount of a manufacturing facility acquired at every first predetermined time and a material consumption amount of the manufacturing facility acquired at every second predetermined time,
the production data including a number of non-defective products or components manufactured in the manufacturing facility at every third predetermined time; and
calculating a carbon dioxide emission amount based on the first activity amount, the second activity amount, a first emission factor that is an emission factor corresponding to the first activity amount, and a second emission factor that is an emission factor corresponding to the second activity amount.

2. The method according to Claim 1, wherein the calculating of the carbon dioxide emission amount comprises:
obtaining a first value by multiplying the first activity amount by the first emission factor;
obtaining a second value by multiplying the second activity amount by the second emission factor; and
summing the first value and the second value.

3. The method according to Claim 1, wherein the facility data further includes a waste amount of the manufacturing facility acquired every fourth predetermined time, and
the method further comprises generating a third activity amount that is an activity amount of a waste amount caused by the manufacture of the one product or one component for each calculation interval in the designated target period by using the waste amount.

4. The method according to Claim 1 or 3, wherein the production data further includes a production quantity that is a number of the products or components manufactured in the manufacturing facility every the third predetermined time, and the first activity amount and the second activity amount are calculated by using the production quantity in addition to the number of non-defective the products or components.

5. An environmental impact information calculation device for calculating a carbon dioxide emission amount caused by manufacture of products or components, the device comprising:
an activity amount data generation unit that generates, for each calculation interval in a designated target period, a first activity amount and a second activity amount based on facility data and production data,
the first activity amount being an activity amount of an energy consumption amount caused by manufacture of one product or one component,
the second activity amount being an activity amount of a material consumption amount caused by the manufacture of the one product or one component,
the facility data including an energy consumption amount of a manufacturing facility acquired at every first predetermined time and a material consumption amount of the manufacturing facility acquired at every second predetermined time,
the production data including a number of non-defective products or components manufactured in the manufacturing facility at every third predetermined time; and
an environmental impact information computation unit that calculates a carbon dioxide emission amount based on the first activity amount and the second activity amount calculated by the activity amount data generation unit, a first emission factor that is an emission factor corresponding to the first activity amount, and a second emission factor that is an emission factor corresponding to the second activity amount.

6. The device according to Claim 5, wherein the environmental impact information computation unit calculates the carbon dioxide emission amount by obtaining a first value by multiplying the first activity amount by the first emission factor, obtaining a second value by multiplying the second activity amount by the second emission factor, and summing the first value and the second value.

7. The device according to Claim 5, wherein
the facility data further includes a waste amount of the manufacturing facility acquired every fourth predetermined time, and
the activity amount data generation unit generates a third activity amount that is an activity amount of a waste amount caused by the manufacture of the one product or one component for each calculation interval in the designated target period by using the waste amount.

8. The device according to Claim 5 or 7, wherein
the production data further includes a production quantity that is a number of the products or components manufactured in the manufacturing facility every the third predetermined time, and
the activity amount data generation unit generates the first activity amount and the second activity amount by using the production quantity in addition to the number of non-defective the products or components.
